# EUROPEAN PATENT SPECIFICATION

(11) **EP 3 590 464 B1**
(45) Date of publication and mention of the grant of the patent: **31.03.2021**
(21) Application number: 19183366.4
(22) Date of filing: 28.06.2019
(51) Int. Cl.: A61C 13/00, A61C 13/15

(54) **PROCESSING METHOD, PROCESSING SYSTEM, AND PROCESSING PROGRAM**
VERARBEITUNGSVERFAHREN, VERARBEITUNGSSYSTEM UND VERARBEITUNGSPROGRAMM
PROCÉDÉ, SYSTÈME ET PROGRAMME DE TRAITEMENT

(30) Priority: 05.07.2018 JP 2018128023
(43) Date of publication of application: 08.01.2020
(73) Proprietor: DGSHAPE Corporation, Hamamatsu-shi, Shizuoka 431-2103 (JP)
(72) Inventor: YOSHIDA, Makoto, Hamamatsu-shi, Shizuoka 4312103 (JP); MAEDA, Toshio, Hamamatsu-shi, Shizuoka 4312103 (JP); UEDA, Jun, Hamamatsu-shi, Shizuoka 4312103 (JP)
(74) Representative: Grünecker Patent- und Rechtsanwälte PartG mbB

(56) References cited:
- WO-A1-2009/073498
- WILLIAM M. JOHNSTON ET AL: "Color and translucency changes during and after curing of esthetic restorative materials", DENTAL MATERIALS, vol. 13, no. 2, 1 March 1997 (1997-03-01), pages 89-97, XP055643040, AMSTERDAM, NL ISSN: 0109-5641, DOI: 10.1016/S0109-5641(97)80017-6

## Description

### Technical field

The present invention relates to processing methods, processing systems, and processing programs.

### Background art

There are prostheses used for dental care (hereinafter, referred to as "dentistry prostheses"), such as dentures and implants. Dentistry prostheses are made by carving a dental material into the shape of a natural tooth.

Natural teeth have different transmittances varying with each tooth. For example, central and lateral incisors (so-called front teeth) are usually opaque on the bottom side (gingival side) and their transmittance gradually increases toward the incisal side. Therefore, despite the dental materials being carved into the shape of a natural tooth, the resultant products disfigure wearers owing to the transmittance of the finished dentistry prostheses differing from that of the natural teeth.

Thus, the methods to make the transmittance of dentistry prostheses closer to that of the natural teeth by changing the composition of the dental material have been considered. For example, JP-A-2014-141388 discloses a technique involving colored zirconia-based sintered materials with high density, strength, and superior light transmittance. In addition, JP-A-2017-122064 discloses a technique involving ceramic materials using which the transmittance of dentistry products can be increased.

However, the transmittance of teeth completely differs from person to person, even when compared among, for example, central incisors. Therefore, the compositions of zirconia-based sintered materials disclosed in JP-A-2014-141388 and ceramic materials disclosed in JP-A-2017-122064 need to be changed as per each individual; and this is troublesome.

WO2009/073498A1 discloses a processing method, a laser processing systems and a processing program according to the preambles of the independent claims 1, 10 and 11.

An object of the present invention is to provide a technique using which dental materials with a transmittance closer to that of an individual's natural tooth can be easily obtained.

### Summary of the invention

The invention is defined by the independent claims 1, 10 and 11. Preferred embodiments of the invention are defined in the dependent claims.

### Effect of the invention

According to the present invention, dental materials with a transmittance closer to that of an individual's natural tooth can be easily obtained.

### Brief description of the drawings

Fig. 1 is a schematic diagram showing a configuration of a CAD/CAM system and a laser processing system according to an embodiment;
Fig. 2 is a flowchart showing a sequence of operations of the laser processing system according to the embodiment;
Fig. 3 is a diagram schematically showing a dental material of the embodiment;
Fig. 4 is a diagram schematically showing a dental material of the embodiment;
Fig. 5 is a diagram schematically showing a dental material of the embodiment; and
Fig. 6 is a diagram schematically showing a dental material of the embodiment.

### Detailed description of the invention

### == Outline of embodiments ==

In a processing method according to this embodiment, a transmittance of a dental material is changed by projecting a laser beam into the dental material and changing character. The use of laser beams makes it possible to achieve processing without any contact.

The term "transmittance" refers to the percentage of light (such as white light) of a certain wavelength that passes through a material.

Dental materials are those from which dentistry prostheses are fabricated. Dental materials which transmit laser radiation (light-transmitting materials) are used as dental materials of this embodiment. Examples of light-transmitting materials that can be used include zirconia-based materials. Zirconia-based materials may be composite materials such as zirconia-containing glass ceramics or zirconia alone with a certain transmittance. Materials do not require 100% or equivalent light transmittance and any transmittance value will suffice as long as the laser beam reaches a certain position for processing.

It should be noted that zirconia-based materials are preferably sintered materials (final sintered materials). Unlike partially sintered materials, fully sintered materials do not require calcination after processing, that contributes to the reduction of processing time. Moreover, fully sintered materials are immune to contraction associated with the calcination of partially sintered materials; therefore, processing precision does not deteriorate.

As for laser beams, light emitted from a short-puled laser is used. In particular, it is preferable to use light emitted from an ultrashort-pulsed laser to project a laser beam directly into a dental material. Ultrashort-pulsed lasers emit laser pulses with durations from picoseconds to femtoseconds. Ablation (non-thermal processing) can be performed by exposing a certain site inside the material to laser pulses emitted from an ultrashort-pulsed laser for a short duration. During ablation, the portion of material that is molten using the laser pulses instantaneously evaporates and scatters, thereby being eliminated; therefore, damage due to heat is less than that using typical laser machining (thermal processing). Therefore, ablation is particularly effective for processing small-sized objects, such as dentistry prostheses.

Character change refers to the change of materials in terms of their composition and structure. By projecting a laser beam onto a certain site inside a dental material, the character is changed at that site, and a processing mark is formed. That is, each processing mark is a region where the character has been changed via a laser beam. A region where a processing mark is formed (a region with a changed character) has a lower light transmittance compared with other region (a region not exposed to a laser beam) owing to, for example, the influence of reflection and/or scattering. Therefore, the desired sites of dental materials with a desired transmittance may be rendered by adjusting the size, position, the number of processing marks or the density in case two or more processing marks are formed (details are described later).

The processing method according to this embodiment is performed, based on a processing data, by a laser processing system 200.

### == CAD/CAM system ==

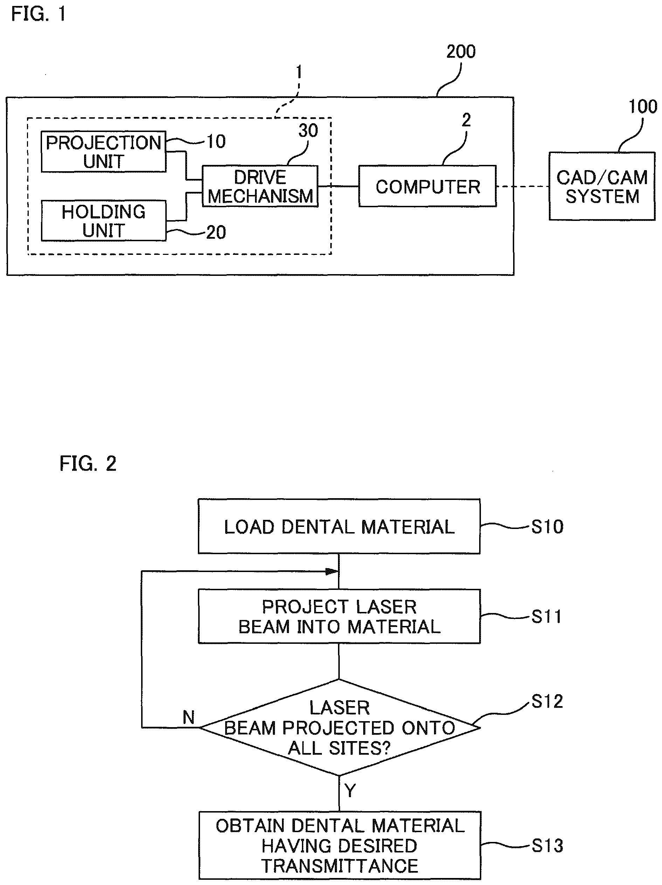

Fig. 1 is a diagram showing a CAD/CAM system 100 and the laser processing system 200. The CAD/CAM system 100 produces processing data and supplies them to the laser processing system 200. The format of the supplied data is not limited as long as the data can be used in the laser processing system 200.

The processing data is used in the laser processing system 200 upon projecting a laser beam into a dental material. Specifically, the processing data is for obtaining dental materials with a transmittance closer to that of natural teeth of each individual. Each processing data includes information about the site at which a laser beam is projected inside a dental material, information about the transmittance, and laser projection conditions (e.g., spot size, intensity, projection time etc.).

The site at which a laser beam is projected is set as one or more points, line segments (straight lines or curves), planes (two-dimensional regions with a certain surface area), or solids (three-dimensional regions with a certain volume). Information about transmittance is for determining the value by which the transmittance of the dental material is to be reduced.

For example, in case that the site at which the laser beam is projected includes a plurality of points, the data corresponding to each point has three-dimensional (XYZ) coordinate values and vector information.

Each ordered triple is used to determine the focal position of the laser beam (i.e., each ordered triple corresponds to the position at which the laser beam is projected inside the material). Coordinate values are determined in consideration of information about transmittance. For example, when the transmittance is set to a low value, the CAD/CAM system 100 sets the coordinate values so that the density of processing marks formed by projecting the laser beam increases (the distance between points reduces). Alternatively, when the transmittance is set to have a low value, the CAD/CAM system 100 sets projection conditions (spot size and intensity) of the laser beam so that the size of each processing mark formed by projecting the laser beam becomes large.

The vector information is used in determining the projection direction of each laser beam (the direction of the laser beam directed to the material). In addition, when a laser beam is projected into the material, the influence of the reflection in the material surface arises. Therefore, when vector information is set, it is more preferable to set it such that the laser beam is vertically directed to the material surface.

In addition, different types of materials have different refractive indices. Therefore, despite the focal position of the laser beam being adjusted to certain ordered triple and the laser beam being projected thereto, the laser beam does not always hit the exact position corresponding to the certain ordered triple owing to the effect of the refractive index. Therefore, the CAD/CAM system 100 may change one or more coordinates (the position(s) at which the laser beam is projected) in consideration of the material's refractive index.

In addition, a laser beam is projected onto two or more sites, the processing data may include order data indicating from which site the laser beam is to be projected (the order of projecting a laser beam). Here, in the case that the laser beam is projected onto sites such that paths of the laser beam are overlapping with each other, the order data is set so that the laser beam is projected onto the overlapped sites in descending order of distance from a material surface through which the laser beam passes (in a series that begins with the farthest and ends with the closest to the material surface). The distance between the surface of the material and each site at which the laser is projected is determined in the direction in which the laser beam is directed.

### == Laser processing system ==

As shown in Fig. 1, the laser processing system 200 includes a processing device 1 and a computer 2. It should be noted that the laser processing system 200 can be formed by the processing device 1 alone when the functions of the computer 2 are integrated into the processing device 1.

The processing device 1 according to this embodiment has three driving axes (the x-, y-, and z-axes) perpendicular to each other as well as two rotation axes (a rotation axis around the x-axis and a rotation axis around the y-axis). The processing device 1 projects a laser beam into a dental material based on a processing data. The processing device 1 includes a projection unit 10, a holding unit 20, and a drive mechanism 30.

The projection unit 10 is for projecting laser beams towards dental materials. The projection unit 10 comprises an oscillator and an optical system. The oscillator oscillates a laser beam having a certain intensity. In addition, the oscillator can adjust the intensity of the laser beam in accordance with the projection condition included in the processing data. The optical system is, for example, a group of lenses for directing the laser beam produced by the oscillator to each material.

In addition, an adjustment unit may be provided in the projection unit 10. The adjustment unit adjusts a spot size and a projection pattern of each laser beam. The adjustment unit is a member such as a galvanometer mirror, a Fresnel lens, a diffractive optical element (DOE), or a spatial light phase modulator (LCOS-SLM). The adjustment unit is disposed, for example, between the oscillator and the group of lenses in the projection unit 10.

The projection pattern can be, for example, a pattern in which a laser beam of a certain spot diameter is projected onto a certain site inside the material as a point or a pattern in which a laser beam of a certain spot diameter is projected while scanning it in a certain direction. Such projection patterns can be achieved by using, for example, a galvanometer mirror as an adjustment unit.

As other projection patterns, laser beams can be projected onto a two-dimensional area or a three-dimensional area collectively. Such projection patterns can be achieved, for example, by using a spatial light phase modulator as an adjustment unit.

Moreover, the adjustment unit in this embodiment can change a spot size for each site when a laser beam is projected with each projection pattern. When the laser beam is projected at a point, the spot size corresponds to the diameter (spot diameter) of the laser beam, whereas when the laser beam using, for example, a spatial light phase modulator is projected at a two-dimensional or three-dimensional region, the spot size corresponds to the surface area of the two-dimensional region or the volume of the three-dimensional region.

The holding unit 20 is for holding a dental material Any method can be used for holding the dental material as long as the dental material being held can be moved and rotated along five axes.

The drive mechanism 30 moves the projection unit 10 and the holding unit 20 relative to each other. The driving mechanism 30 includes a driving motor and other components. The drive mechanism 30 can move at least one of the projection unit 10 and the holding unit 20 in the three, i.e., x-, y-, and z-directions at the same time.

The computer 2 controls operations of the projection unit 10 and the drive mechanism 30. The controller 2 according to this embodiment controls the projection unit 10 and the drive mechanism 30 such that a transmittance of the dental material is changed by projecting a laser beam into the dental material and changing character.

Specifically, the computer 2 controls, based on the processing data, the drive mechanism 30 such that the laser beam can be projected onto a certain site inside the dental material (such that a certain site coincides with the focal position of the laser beam) to adjust the relative position of the projection unit 10 and the holding unit 20 (the dental material held by the holding unit 20). Furthermore, the computer 2 controls the projection unit 10 to adjust the spot size and the intensity of the laser beam to be projected. Then, the computer 2 controls the projection unit 10 to project the laser beam onto the dental material for a certain amount of time. A change of character occurs at the site that has been exposed to the laser beam and a processing mark is formed there. The computer 2 is an example of the "control unit."

It should be noted that the spot size, intensity, and projection time affect the power (energy) of the projected laser beam. These parameters may be included beforehand in the processing data as described above, or may be set by the processing device 1. In addition, when the relative position between the projection unit 10 and the holding unit 20 is adjusted, the processing device 1 may perform some corrections based on the refractive index of the dental material.

Furthermore, as long as a processing method described later can be performed, the laser processing system 200 does not necessary have five axes. For example, a processing device with three axes, i.e., a driving axis for driving the projection unit 10 in the z-direction and driving axes for driving the holding unit 20 in the x- and y-directions, can also be used.

### == Processing using processing system ==

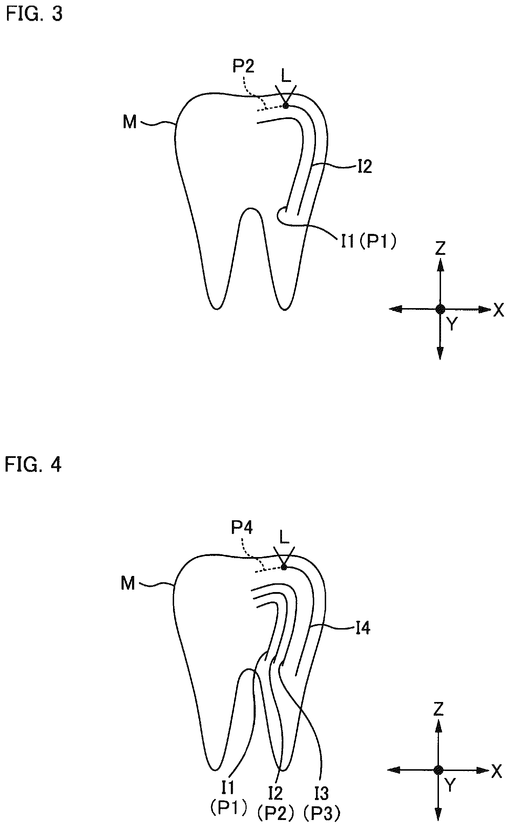

Next, referring to Figs. 2 to 6, a specific example of the processing method according to this embodiment is described. The processing method has been installed beforehand on the laser processing system 200 as a dedicated processing program. In this example, described is an example in which a laser beam is projected into a dental material M that has been formed to have a shape similar to that of a natural tooth. The shaping can be performed using a known machining device. Fig. 2 is a flow chart showing a sequence of operations of the laser processing system 200. Figs. 3 to 6 are diagrams schematically showing the inside of the dental material M that is subjected to processing using the processing method according to this embodiment. The x-, y-, and z-axes shown in Figs. 3 to 6 represent three axes perpendicular to each other. The processing data for the dental material M is produced beforehand by the CAD/CAM system 100.

An operator loads a dental material M into the holding unit 20 of the processing device 1 (load a dental material; step 10).

The computer 2 causes the processing device 1 to project a laser beam based on the processing data for the dental material M.

The computer 2 allows a laser beam to be projected based onto a site represented by the processing data (a site inside the material whose transmittance is desired to be changed) and projection conditions (project a laser beam into the material; step 11).

Now, how a laser beam is projected is described specifically referring to Figs. 3 to 6. In Figs. 3 to 6, each site at which a laser beam is to be projected is a curved line represented by a dotted line and processing marks formed by projecting the laser beam are shown by solid lines.

For example, as shown in Fig. 3, the computer 2 can project a laser beam L onto a plurality of sites (sites P1 and P2) along the contour of the surface of the dental material M. In this case, the width of a processing mark I1 formed by projecting the laser beam to the site P1 is almost equal to the width of a processing mark 12 formed by projecting the laser beam onto the site P2. It should be noted that Fig. 3 shows an example in which the site P1 has already been subjected to laser projection and the processing mark I1 has been formed.

Furthermore, as shown in Fig. 4, the computer 2 can project the laser beam L onto a plurality of sites (sites P1 to P4) that are apart from each other at different intervals. The distance between the sites P1 and P2 and the distance between the sites P2 and P3 are smaller (dense) than the distance between the sites P3 and P4. Accordingly, it can be said that processing marks I1 to 14 formed by projecting the laser beam onto the sites P1 to P4 have different densities from each other. It should be noted that Fig. 4 shows an example in which the sites P1 to P3 have already been subjected to laser projection and the processing marks I1 to 13 have been formed.

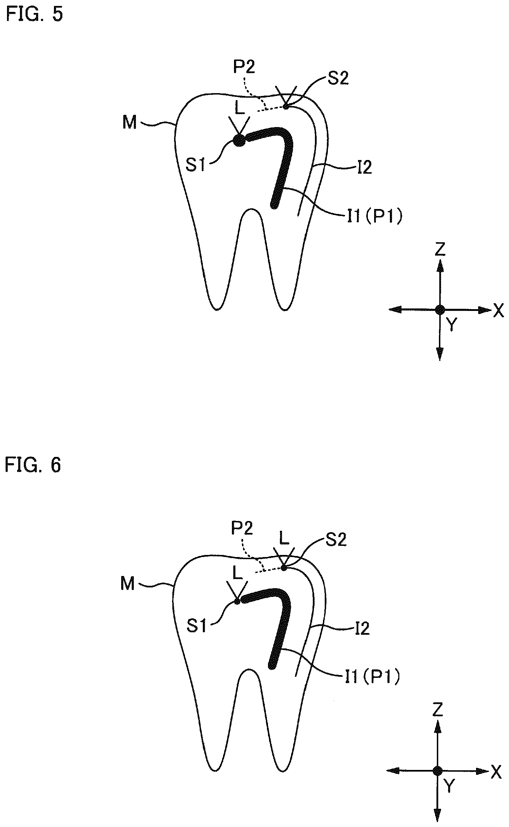

Furthermore, as shown in Fig. 5, the computer 2 can change, in the case that the laser beam L is projected onto a plurality of sites (the sites P1 and P2), the spot diameter of the laser beam L for each of the sites P1 and P2. In the example shown in Fig. 5, a spot diameter S1 of a laser beam projected onto the site P1 is larger than a spot diameter S2 of a laser beam projected onto the site P2. Accordingly, the width of the processing mark I1 formed by projecting the laser beam onto the site P1 is larger than the width of the processing mark I2 formed by projecting the laser beam onto the site P2. It should be noted that Fig. 5 shows an example in which the site P1 has already been subjected to laser projection and the processing mark II has been formed.

Alternatively, as shown in Fig. 6, the computer 2 can change, in the case that the laser beam L is projected onto a plurality of sites (the sites P1 and P2), the intensity of the laser beam for each of the sites P1 and P2. In the example shown in Fig. 6, the laser beam projected onto the site P1 has a larger intensity than the laser beam projected onto the site P2. Thus, the laser beams projected onto the sites P1 and P2 have similar spot diameters S1 and S2, respectively, whereas the width of the processing mark I1 formed by projecting the laser beam onto the site P1 is larger than the width of the processing mark 12 formed by projecting the laser beam onto the site P2 does. It should be noted that Fig. 6 shows an example in which the site P1 has already been subjected to laser projection and the processing mark I1 has been formed.

Now, in the case that the laser beam is projected onto sites such that paths of the laser beam are overlapping with each other, when the laser beam is projected onto these sites from the same direction, a change of character of the material occurs at the site where the laser beam is projected first and it is possible that no laser beams can be projected anymore onto other sites located on the farther side (further inside the material). For example, in the case that the laser beam is projected from the top downward in the z-direction in the example shown in Fig. 3, if the site P2 is exposed to the laser beam first, it is possible that no laser beams can be projected onto the site P1 located further inside the site P2 as a result of a change of character at the site P2.

Thus, it is preferable that, in the case that the laser beam is projected onto sites such that paths of the laser beam are overlapping with each other, the laser beam is projected onto the overlapped sites in descending order of distance from a material surface through which the laser beam passes.

For example, it is assumed that the laser beam is projected from the top downward in the z-direction in the example shown in Fig. 3. In this case, the computer 2 controls the projection unit 10 and causes it to project the laser beam onto the site P1 that lies farthest off from the material surface. Then, the computer 2 controls the projection unit 10 and projects the laser beam onto the site P2 that lies farthest off from the material surface but the site P1. The order of the laser projection can be determined using the order data included in the processing data. In the case that the laser beam is projected onto each of the sites P1 and P2, it is preferable that the laser is projected onto positions on the curve of the site P1 (site P2) in the descending order of distance from the material surface through which the laser beam passes.

Furthermore, in the processing data, in the event that the site at which the laser beam is projected has been corrected based on the refractive index of the dental material M, the computer 2 can control the projection unit 10 and causes it to project the laser beam onto the site that has been corrected. Furthermore, the computer 2 can adjust the relative position between the projection unit 10 and the holding unit 20 such that the laser beam is vertically directed to the surface of the dental material M.

It should be noted that two or more methods of projecting the laser beam can be used in combination. For example, depending on the sites at which the laser beam is projected, both of the intensity and the spot size of the laser beam may be changed. Furthermore, the intensity and/or the spot size of the laser beam can be changed in the middle of the site P1 shown in Fig. 3 and other figures. In addition, in Figs. 3 to 6, illustrated are the examples in which the processing marks are formed in a part of the dental material M, but where the processing marks are formed is set depending on the transmittance of a natural tooth. Accordingly, the processing marks can possibly be formed in and on the entire dental material M depending on the transmittance of a natural tooth.

When the projection of the laser beam onto all sites included in the processing data has been completed (Y in step 12), certain processing marks are formed in the dental material M and thus the transmittance changes. That is, a dental material M having a desired transmittance can be obtained (obtain a dental material having a desired transmittance; step 13). It should be noted that the dental material M is the one that has already been subjected to calcination and finishing, the dental material M obtained in step 13 can be used as a dentistry prosthesis without any further processing.

As described above, in the processing method according to this embodiment, the transmittance of the dental material M is changed by projecting a laser beam into the dental material M and changing character.

Thus, as a result of changing character inside the dental material M and forming processing marks, the transmittance of the part where a processing mark has been formed becomes different from the transmittance of the remainder. Accordingly, by adjusting processing marks such that a transmittance closer to that of a natural tooth of a certain individual can be achieved, it is possible to provide a dentistry prosthesis suitable for each person. In this case, it is unnecessary to adjust the composition of the dental material for each person because what is required is only to process inside the dental material with a laser beam. Thus, with the processing method according to this embodiment, dental materials with a transmittance closer to that of an individual's natural tooth can be easily obtained.

In addition, in the processing method according to this embodiment, it is possible to project, in the case that the laser beam is projected onto two or more sites, the laser beam such that processing marks formed by projecting the laser beam have different densities from each other. By changing the densities of the processing marks, it is possible to adjust the transmittance of the dental material more precisely. Thus, it is possible to perform processing for a natural tooth of each person (such that the transmittance becomes closer to that of a natural tooth).

Furthermore, in the processing method according to this embodiment, in the case that the laser beam is projected onto two or more sites, a spot size of the laser beam can be changed for each of the sites. By changing the spot size of the laser beam, it is possible to adjust the size of the processing marks formed in the material. Thus, it is possible to perform processing for a natural tooth of each person (such that the transmittance becomes closer to that of a natural tooth).

Furthermore, in the processing method according to this embodiment, in the case that the laser beam is projected onto two or more sites, an intensity of the laser beam can be changed for each of the sites. By changing the intensity of the laser beam, it is possible to adjust the size of the processing marks formed in the material. Thus, it is possible to perform processing for a natural tooth of each person (such that the transmittance becomes closer to that of a natural tooth).

Furthermore, in the processing method according to this embodiment, in the case that the laser beam is projected onto sites such that paths of the laser beam are overlapping with each other, the laser beam is projected onto the overlapped sites in descending order of distance from a material surface through which the laser beam passes. By projecting the laser beam in the manner just mentioned, the projected laser beam is not affected by the character change. That is, such problems are not likely to occur that a laser beam cannot pass through a site where character has been changed or that the refraction and reflection of a laser beam which otherwise would occur at the site where character has been changed prevents the laser beam from being projected precisely onto another site.

In addition, in the processing method according to this embodiment, it is possible to project the laser beam onto a site that has been corrected based on a refractive index of the dental material. In this case, the laser beam can be projected onto a desired site without being affected by the refractive ind.ex of the dental material.

Moreover, in the processing method according to this embodiment, it is possible to direct the laser beam vertically to a surface of the dental material. By directing the laser beam in a manner just mentioned, it is possible to prevent any displacement of a focal point owing to the refraction of the laser beam.

Alternatively, the laser processing system 200 according to this embodiment includes the projection unit 10 that projects a laser beam onto the dental material M; the holding unit 20 that holds the dental material M; the drive mechanism 30 that moves the projection unit 10 and the holding unit 20 relative to each other; and the controller 2 that controls the projection unit 10 and the drive mechanism 30 such that a transmittance of the dental material M is changed by projecting a laser beam into the dental material M and changing character. With the laser processing system 200 mentioned above, dental materials with a transmittance closer to that of an individual's natural tooth can be easily obtained.

Furthermore, the processing program according to this embodiment, which is a program executed in the laser processing system 200 including the projection unit 10 that projects a laser beam onto the dental material M; the holding unit 20 that holds the dental material M; and the drive mechanism 30 that moves the projection unit 10 and the holding unit 20 relative to each other, can be used for causing the laser processing system 200 to achieve a function of controlling the projection unit 10 and the drive mechanism 30 such that a transmittance of the dental material M is changed by projecting a laser beam into the dental material and changing character. With this processing program, dental materials with a transmittance closer to that of an individual's natural tooth can be easily obtained using the laser processing system 200.

### = Others =

The aforementioned embodiment describes an example in which a laser beam is projected onto a dental material that has been formed into the shape of a natural tooth. However, shaping and finishing can be performed in the laser processing system 200. In this case, operations for attaching and detaching each dental material can be omitted. Thus, it is possible to reduce processing time and prevent deterioration of precision of processing. It should be noted that, for processing methods of shaping and finishing using a laser beam, Japanese patent application No. 2016-214176 is relevant prior art. The processing method, however, is not limited thereto.

Unlike the aforementioned embodiment, processing marks may be formed beforehand in a material and then the material may be formed into the shape of a natural tooth.

It is also possible to supply a program to a computer using a non-transitory computer readable medium with an executable program thereon, in which the processing program in the above embodiment is stored. Examples of the non-transitory computer readable medium include magnetic storage media (e.g. flexible disks, magnetic tapes, and hard disk drives), and CD-ROMs (read only memories).

The above embodiment is provided as an example of the invention and does not limit the scope of the invention. Various omissions, substitutions, and changes can be made to the above configuration without departing from the subject matter of the invention. The above embodiment and modifications thereof are included in the scope of the invention recited in the claims.

## Claims

1. A processing method comprising:
changing a transmittance of a dental material (M) by projecting a laser beam (L) into the dental material (M) and changing character,
**characterized in that**
projecting a laser beam (L) is ablation processing,
the dental material (M) transmits the laser beam (L) of a certain wavelength, and
the changing character is to form processing marks (11 to 14) inside the dental material (M).

2. The processing method according to Claim 1, wherein, in the case that the laser beam (L) is projected onto two or more sites (P1 to P4), the laser beam (L) is projected such that the processing marks (11 to 14) formed by projecting the laser beam (L) have different densities from each other.

3. The processing method according to Claim 1 or 2, wherein
in the case that the laser beam (L) is projected onto two or more sites (P1 to P4), a spot size (S1, S2) of the laser beam (L) can be changed for each of the sites (P1 to P4).

4. The processing method according to any one of Claims 1 to 3, wherein
in the case that the laser beam (L) is projected onto two or more sites (P1 to P4), an intensity of the laser beam (L) can be changed for each of the sites (P1 to P4).

5. The processing method according to any one of Claims 1 to 4, wherein
in the case that the laser beam (L) is projected onto sites (P1 to P4) such that paths of the laser beam (L) are overlapping with each other, the laser beam (L) is projected onto the overlapped sites in descending order of distance from a material surface through which the laser beam (L) passes.

6. The processing method according to any one of Claims 1 to 5, wherein
the laser beam (L) is projected onto a site (P1 to P4) that has been corrected based on a refractive index of the dental material (M).

7. The processing method according to any one of Claims 1 to 6, wherein
the laser beam (L) is vertically directed to a surface of the dental material (M).

8. The processing method according to any one of Claims 1 to 7, wherein the laser processing is performed based on a processing data.

9. The processing method according to any one of Claims 1 to 8, wherein, in the case that the laser beam (L) is projected onto two or more sites (P1 to P4), the two or more sites (P1 to P4) are different from each other.

10. A laser processing system (200) comprising:
a projection unit (10) that is configured to project a laser beam (L) onto a dental material (M);
a holding unit (20) that is configured to hold the dental material (M);
a drive mechanism (30) that is configured to move the projection unit (10) and the holding unit (20) relative to each other; and
a control unit (2) that is configured to control the projection unit (10) and the drive mechanism (30) such that a transmittance of the dental material (M) is changed by projecting a laser beam (L) into the dental material (M) and changing character,
**characterized in that**
projecting a laser beam (L) is ablation processing,
the dental material (M) transmits the laser beam (L) of a certain wavelength, and
the changing character is to form processing marks (11 to 14) inside the dental material (M).

11. A processing program executed in a laser processing system (200) comprising a projection unit (10) that is configured to project a laser beam (L) onto a dental material (M); a holding unit (20) that is configured to hold the dental material (M); and a drive mechanism (30) that is configured to move the projection unit (10) and the holding unit (20) relative to each other, the program being for causing the laser processing system (200) to achieve a function of controlling the projection unit (10) and the drive mechanism (30) such that a transmittance of the dental material (M) is changed by projecting a laser beam (L) into the dental material (M) and changing character,
**characterized in that**
projecting a laser beam (L) is ablation processing,
the dental material (M) transmits the laser beam (L) of a certain wavelength, and
the changing character is to form processing marks (11 to 14) inside the dental material (M).

## Patentansprüche

1. Verarbeitungsverfahren, umfassend:
Ändern einer Durchlässigkeit eines Dentalmaterials (M) durch Projizieren eines Laserstrahls (L) in das Dentalmaterial (M) und Ändern einer Eigenschaft;
**dadurch gekennzeichnet, dass**
das Projizieren eines Laserstrahls (L) eine Ablationsverarbeitung ist,
das Dentalmaterial (M) den Laserstrahl (L) einer bestimmten Wellenlänge überträgt und
die sich ändernde Eigenschaft darin besteht, Verarbeitungsmarkierungen (11 bis 14) innerhalb des Dentalmaterials (M) auszubilden.

2. Verarbeitungsverfahren nach Anspruch 1, bei dem für den Fall, dass der Laserstrahl (L) auf zwei oder mehr Stellen (P1 bis P4) projiziert wird, der Laserstrahl (L) so projiziert wird, dass die Verarbeitungsmarkierungen (I1 bis I4), die durch Projizieren des Laserstrahls (L) ausgebildet werden, zueinander unterschiedliche Dichten haben.

3. Verarbeitungsverfahren nach Anspruch 1 oder 2, bei dem,
für den Fall, dass der Laserstrahl (L) auf zwei oder mehr Stellen (P1 bis P4) projiziert wird, eine Punktgröße (S1, S2) des Laserstrahls (L) für jede der Stellen (P1 bis P4) geändert werden kann.

4. Verarbeitungsverfahren nach einem der Ansprüche 1 bis 3, bei dem,
für den Fall, dass der Laserstrahl (L) auf zwei oder mehr Stellen (P1 bis P4) projiziert wird, eine Intensität des Laserstrahls (L) für jede der Stellen (P1 bis P4) geändert werden kann.

5. Verarbeitungsverfahren nach einem der Ansprüche 1 bis 4, bei dem,
für den Fall, dass der Laserstrahl (L) so auf Stellen (P1 bis P4) projiziert wird, dass sich die Wege des Laserstrahls (L) überlappen, der Laserstrahl (L) auf die überlappenden Stellen in absteigender Reihenfolge des Abstands von einer Materialoberfläche projiziert wird, die der Laserstrahl (L) durchläuft.

6. Verarbeitungsverfahren nach einem der Ansprüche 1 bis 5, bei dem
der Laserstrahl (L) auf eine Stelle (P1 bis P4) projiziert wird, die anhand eines Brechungsindex des Dentalmaterials (M) korrigiert wurde.

7. Verarbeitungsverfahren nach einem der Ansprüche 1 bis 6, bei dem
der Laserstrahl (L) vertikal auf eine Oberfläche des Dentalmaterials (M) gerichtet wird.

8. Verarbeitungsverfahren nach einem der Ansprüche 1 bis 7, bei dem die Laserbearbeitung basierend auf Verarbeitungsdaten ausgeführt wird.

9. Verarbeitungsverfahren nach einem der Ansprüche 1 bis 8, bei dem für den Fall, dass der Laserstrahl (L) auf zwei oder mehr Stellen (P1 bis P4) projiziert wird, die zwei oder mehr Stellen (P1 bis P4) voneinander verschieden sind.

10. Laserbearbeitungssystem (200), umfassend:
eine Projektionseinheit (10), die dazu eingerichtet ist, einen Laserstrahl (L) auf ein Dentalmaterial (M) zu projizieren;
eine Halteeinheit (20), die dazu eingerichtet ist, das Dentalmaterial (M) zu halten;
einen Antriebsmechanismus (30), der dazu eingerichtet ist, die Projektionseinheit (10) und die Halteeinheit (20) relativ zueinander zu bewegen; und
eine Steuereinheit (2), die dazu eingerichtet ist, die Projektionseinheit (10) und den Antriebsmechanismus (30) so zu steuern, dass eine Durchlässigkeit des Dentalmaterials (M) durch Projizieren eines Laserstrahls (L) in das Dentalmaterial (M) und Ändern der Eigenschaft geändert wird,
**dadurch gekennzeichnet, dass**
das Projizieren eines Laserstrahls (L) eine Ablationsverarbeitung ist,
das Dentalmaterial (M) den Laserstrahl (L) einer bestimmten Wellenlänge überträgt und
die sich ändernde Eigenschaft darin besteht, Verarbeitungsmarkierungen (11 bis 14) innerhalb des Dentalmaterials (M) auszubilden.

11. Verarbeitungsprogramm, das in einem Laserbearbeitungssystem (200) ausgeführt wird, umfassend eine Projektionseinheit (10), die dazu eingerichtet ist, einen Laserstrahl (L) auf ein Dentalmaterial (M) zu projizieren; eine Halteeinheit (20), die dazu eingerichtet ist, das Dentalmaterial (M) zu halten; und einen Antriebsmechanismus (30), der dazu eingerichtet ist, die Projektionseinheit (10) und die Halteeinheit (20) relativ zueinander zu bewegen, wobei das Programm das Laserbearbeitungssystem (200) veranlasst, eine Funktion zum Steuern der Projektionseinheit (10) und des Antriebsmechanismus (30) derart zu erreichen, dass eine Durchlässigkeit des Dentalmaterials (M) durch Projizieren eines Laserstrahls (L) in das Dentalmaterial (M) und Ändern der Eigenschaft geändert wird;
**dadurch gekennzeichnet, dass**
das Projizieren eines Laserstrahls (L) eine Ablationsverarbeitung ist,
das Dentalmaterial (M) den Laserstrahl (L) einer bestimmten Wellenlänge überträgt und
die sich ändernde Eigenschaft darin besteht, Verarbeitungsmarkierungen (11 bis 14) innerhalb des Dentalmaterials (M) auszubilden.

## Revendications

1. Procédé de traitement comprenant :
le changement d'une transmittance d'un matériau dentaire (M) en projetant un faisceau laser (L) dans le matériau dentaire (M) et en changeant le caractère,
**caractérisé en ce que**
la projection d'un faisceau laser (L) est un traitement d'ablation,
le matériau dentaire (M) transmet le faisceau laser (L) d'une certaine longueur d'onde, et
le changement de caractère sert à former des marques de traitement (11 à 14) à l'intérieur du matériau dentaire (M).

2. Procédé de traitement selon la revendication 1, dans le cas où le faisceau laser (L) est projeté sur deux sites (P1 à P4) ou plus, le faisceau laser (L) est projeté de sorte que les marques de traitement (11 à 14) formées en projetant le faisceau laser (L) ont des densités différentes l'une de l'autre.

3. Procédé de traitement selon la revendication 1 ou 2,
dans le cas où le faisceau laser (L) est projeté sur deux sites (P1 à P4) ou plus, une taille de spot (S1, S2) du faisceau laser (L) peut être changée pour chacun des sites (P1 à P4).

4. Procédé de traitement selon l'une quelconque des revendications 1 à 3,
dans le cas où le faisceau laser (L) est projeté sur deux sites (P1 à P4) ou plus, une intensité du faisceau laser (L) peut être changée pour chacun des sites (P1 à P4).

5. Procédé de traitement selon l'une quelconque des revendications 1 à 4,
dans le cas où le faisceau laser (L) est projeté sur les sites (P1 à P4) de sorte que les trajets du faisceau laser (L) se chevauchent l'un l'autre, le faisceau laser (L) est projeté sur les sites chevauchés en ordre descendant de distance depuis une surface de matériau à travers laquelle le faisceau laser (L) passe.

6. Procédé de traitement selon l'une quelconque des revendications 1 à 5,
le faisceau laser (L) étant projeté sur un site (P1 à P4) qui a été corrigé sur la base d'un indice de réfraction du matériau dentaire (M).

7. Procédé de traitement selon l'une quelconque des revendications 1 à 6,
le faisceau laser (L) étant verticalement dirigé vers une surface du matériau dentaire (M).

8. Procédé de traitement selon l'une quelconque des revendications 1 à 7, le traitement laser étant effectué sur la base de données de traitement.

9. Procédé de traitement selon l'une quelconque des revendications 1 à 8, dans le cas où le faisceau laser (L) est projeté sur deux sites (P1 à P4) ou plus, les deux sites (P1 à P4) ou plus sont différents l'un de l'autre.

10. Système de traitement laser (200) comprenant :
une unité de projection (10) qui est configurée pour projeter un faisceau laser (L) sur un matériau dentaire (M) ;
une unité de maintien (20) qui est configurée pour maintenir le matériau dentaire (M) ;
un mécanisme d'entraînement (30) qui est configuré pour déplacer l'unité de projection (10) et l'unité de maintien (20) l'une par rapport à l'autre ; et
une unité de commande (2) qui est configurée pour commander l'unité de projection (10) et le mécanisme d'entraînement (30) de sorte qu'une transmittance du matériau dentaire (M) est changée par la projection d'un faisceau laser (L) dans le matériau dentaire (M) et en changeant le caractère,
**caractérisé en ce que**
la projection d'un faisceau laser (L) est le traitement d'ablation,
le matériau dentaire (M) transmet le faisceau laser (L) d'une certaine longueur d'onde, et
le changement de caractère sert à former des marques de traitement (11 à 14) à l'intérieur du matériau dentaire (M).

11. Programme de traitement exécuté dans un système de traitement laser (200) comprenant une unité de projection (10) qui est configurée pour projeter un faisceau laser (L) sur un matériau dentaire (M) ; une unité de maintien (20) qui est configurée pour maintenir le matériau dentaire (M) ; et un mécanisme d'entraînement (30) qui est configuré pour déplacer l'unité de projection (10) et l'unité de maintien (20) l'une par rapport à l'autre, le programme servant à amener le système de traitement laser (200) à atteindre une fonction de commande de l'unité de projection (10) et du mécanisme d'entraînement (30) de sorte qu'une transmittance du matériau dentaire (M) est changée en projetant un faisceau laser (L) dans le matériau dentaire (M) et en changeant le caractère,
**caractérisé en ce que**
la projection d'un faisceau laser (L) est le traitement d'ablation,
le matériau dentaire (M) transmet le faisceau laser (L) d'une certaine longueur d'onde, et
le changement de caractère sert à former des marques de traitement (11 à 14) à l'intérieur du matériau dentaire (M).
